# EUROPEAN PATENT SPECIFICATION

(11) **EP 3 124 689 B1**
(45) Date of publication and mention of the grant of the patent: **07.03.2018**
(21) Application number: 15178432.9
(22) Date of filing: 27.07.2015
(51) Int. Cl.: D06F 58/28, D06F 58/20

(54) **METHOD OF OPERATING A HEAT-PUMP DRYER**
VERFAHREN ZUM BETREIBEN EINES WÄRMEPUMPENTROCKNERS
PROCÉDÉ D'EXPLOITATION D'UN SÉCHOIR À POMPE À CHALEUR

(43) Date of publication of application: 01.02.2017
(73) Proprietor: Electrolux Appliances Aktiebolag, 105 45 Stockholm (SE)
(72) Inventor: ZANDONA', Stefano, 33080 Porcia (PN) (IT); RAGOGNA, Roberto, 33080 Porcia (PN) (IT); GEROLIN, Giancarlo, 33080 Porcia (PN) (IT); VIAN, Alessandro, 33080 Porcia (PN) (IT); DEL PUPPO, Matteo, 33080 Porcia (PN) (IT)
(74) Representative: Electrolux Group Patents

(56) References cited:
- EP-A1- 2 612 965
- EP-A1- 2 679 718
- EP-A1- 2 733 255
- WO-A1-2015/078523
- DE-A1-102011 078 921

## Description

The invention relates to the operation of a heat-pump dryer during execution of a drying program. Components of the dryer are controlled in dependency of the temperature of the heat pump system.

WO 2014/067797 A2 suggests a drying program for a heat-pump dryer in which the temperature of the heat pump system is monitored. In dependency of the monitored temperature, the power of a drying air fan is adjusted. Thereby optimized operation conditions of the heat pump system should be maintained, wherein specifically with increasing heat-pump temperature the drying air fan is adjusted such that a higher amount of heat is removed from the heat pump system. The motor driving the fan can also drive the drum.

WO 2015/078523 A1 discloses a heat pump dryer, wherein when an abnormal condition of a compressor is detected a protective switch switches compressor off. The refrigerant temperature is detected, wherein any sudden rise of the refrigerant temperature is monitored by a first rate. A sudden rise of the first rate is indicative of an abnormal state of compressor. Turning off the compressor may be accompanied by turning off the process air fan or turning off or reducing the rotation speed of the drum motor

EP 2 612 965 A1 relates to a heat pump dryer providing a "Silent Dry" program, wherein during "Silent Dry"-mode a compressor as well as a process air fan are operated at low speed.

It is an object of the invention, to provide an operation method for a heat pump dryer which results in lower noise emission and/or lower power consumption.

The invention is defined in claim 1. Particular embodiments are set out in the dependent claims.

In a first aspect of the invention as in claim 1, a method for operating a heat pump dryer during a drying program is provided. The dryer comprises: a cabinet; a drum arranged within the cabinet and being adapted to receive laundry for drying the laundry within the drum using drying air; an air channel adapted to guide the drying air from at least one air outlet at the drum to at least one air inlet at the drum for providing an air circulation arrangement; a drying air fan adapted to convey the drying air through the air circulation arrangement; a heat pump system comprising a first heat exchanger adapted to heat the drying air, a second heat exchanger adapted to cool the drying air for humidity condensation, and a compressor adapted to circulate refrigerant through the first and second heat exchangers; and a temperature sensor adapted to detect a temperature of the heat pump system.

Preferably the heat pump system further comprises an expansion device and/or a cooling air fan for cooling the compressor or an auxiliary heat exchanger of the heat pump system and/or one or more further components as described below in the detailed embodiment. The dryer may be a dryer or a washer-dryer implementing the drying function/program. The air circulation arrangement is provided by the air channel and the fluidly connected drum. E.g. in the washer-dryer the drum may be arranged in a tub and the at least one inlet and/or outlet opening is provided at the tub. The drying air guiding by the tub is providing the connection between the drum and the at least one inlet/outlet where applicable. The drum may be rotated by a drum motor around a horizontal axis, around an axis inclined relative to the vertical axis, or around a vertical axis. In the washer-dryer preferably one motor is provided for rotating the drum and another motor is provided for rotating the drying air fan.

The method comprises: starting a drying program; monitoring the temperature of the heat pump system; and, if the temperature of the heat pump system is at or above a first threshold value, deactivating the compressor and reducing at least one of: a) the drying air fan rotational speed, and/or b) the drying air fan conveyance rate, and/or c) the drum rotational speed. Herein, 'deactivated' means not operated or stopped (zero rotation speed), while 'operated' means 'activated' where the component is rotated with non-zero rotation speed.

The drying program has a first drying phase which is before the temperature reaches (the first time) at or above the first threshold value, and a second drying phase after the first drying phase. In such denotation the compressor is deactivated when the second drying phase starts and the drying air fan rotation speed and/or conveyance rate and/or drum rotation speed is reduced. For example, while the compressor is deactivated, the fan and/or drum rotational speed is reduced.

The motor for driving the drying air fan is a variable speed motor and the method further comprises: receiving a user-input indicating the option silent-mode or night-mode for operating the dryer; and
a) if the user-input indicates such mode selection by the user, operating, at least for predetermined periods of the drying program, the drying air fan at a second speed in case the drying air fan is activated, and
b) if the user-input indicates that such mode was not selected by the user, operating the drying air fan at a first speed in case the drying air fan is activated; wherein the first speed is higher than the second speed. Preferably during the silent-mode or night-mode, the drying air fan is not operated always with the reduced second speed.

The noise emission of the heat pump dryer is reduced when besides the compressor also the drying air fan rotation speed and/or conveyance rate and/or drum rotation speed is/are reduced. This improves the user convenience when the dryer is located close to the living area of the user, in particular when the user wishes to avoid noise in the surroundings and/or in the night. At the same time, as the power consumed by these components is reduced, the momentary power consumption is reduced. One or both of the advantages are such that a possibly longer operation time of the drying program as compared to a 'basic' drying program is acceptable.

The lower power consumption not necessarily results in lower energy consumption for drying the same amount of laundry from the same humidity level. For the operation method it is acceptable that the duration is longer or becomes longer as compared to a basic drying program with the same drying result. However, it is generally observed that with longer drying periods the total energy consumption is lower for the same drying result when compared with faster drying programs. 'Power consumption' primarily relates to the power consumed and not to the energy consumed.

In an embodiment (which is the case in most dryers that are not washer-dryers), the drying air fan and the drum are driven by one common motor, then (relative) fan and drum speeds are reduced synchronously. Preferably (see below), when the drying air fan is driven in the counter clockwise rotation direction (second rotation direction), the fan conveyance rate is reduced due to a lower drying air conveyance rate as compared to rotate in the clockwise direction (first rotation direction) at the same speed. By this way the conveyance rate of the drying air fan can be reduced without reducing its (absolute) rotation speed and/or the (absolute) rotation speed of the drum. The effect of lower conveyance rate is a lower drying air flow rate which causes less noise than a higher drying air flow rate. Thus noise reduction is achieved when conveyance rate of fan is reduced, even if fan speed is not reduced.

The speed and/or conveyance rate 'reduction' means a reduction of the respective parameter(s) over time period: for example when averaging the speed/conveyance rate over 2, 3, 4 or 5 min, or average it over a time period during which the compressor is stopped and/or speed/flow rate is reduced. E.g. when comparing respective periods before and after stopping the compressor the (first time) when the temperature is at or above the first threshold value.

Preferably, in particular for a washer-dryer, the drying air fan is driven by a motor independent of a motor driving the drum. Preferably the method comprises: setting, at least for one or more predetermined periods of the drying program, the rotation speed or the maximum rotation speed of the drum in dependency of the temperature of the heat pump system.

In an embodiment, if it is detected that the temperature of the heat pump system is at or above the first threshold value, the compressor is deactivated after a predetermined delay time. Preferably the drying air fan rotation speed and/or conveyance rate and/or the drum rotation speed are (immediately) reduced when the temperature is at or above the first threshold value.

In an embodiment the end of a period, during which the compressor is stopped and during which at least one of the drum rotation speed, the fan rotational speed, and the flow rate is reduced, is determined by using one or more of the following conditions: a) a predetermined time period has lapsed, b) the temperature of the heat pump system is at or below a second threshold value, c) the temperature of the drying air is at or below a first drying air threshold value, d) a temperature difference as detected by two temperature sensors arranged at two different positions along the drying air circulation arrangement is at or is below a second drying air threshold value, and e) a temperature difference between a drying air temperature at the time of deactivating the compressor and the current drying air temperature is at or is above a third drying air threshold value. The period can also be denoted as duration. In case of a predetermined time period, preferably the time is counted since switching off the compressor. Restarting the compressor means that the compressor is reactivated and vice versa. Preferably the second threshold value of the heat pump system temperature is lower than the first threshold value.

Preferably during the drying program, at the end of such determined period, the compressor is restarted. And/or preferably at the end of the period the speed of drum and/or fan and/or conveyance rate is/are kept low - in this way the noise emission is still reduced despite e.g. restarting the compressor.

Where a drying air temperature is to be detected, preferably the drying air temperature is detected at a dedicated position along the drying air circulation arrangement, preferably any position along the air channel, more preferably at the drying air inlet and/or outlet at the drum. A temperature difference is preferably the difference of temperature detected at the drum inlet and the drum outlet.

In an embodiment, when the end of the period has been determined or when the period is lapsed, one or more of the following steps are implemented: a) the compressor is activated again, b) the rotation speed of a or the compressor cooling fan is reduced or the compressor cooling fan is deactivated or the duty rate of activating the compressor cooling fan is reduced, c) one or more of the following are increased: the drying air fan rotation speed, the drum rotation speed, and/or the conveyance rate of the drying air fan, and d) one or more are restored to the operation values at the time immediately before starting the period: the rotation speed of the compressor cooling fan, the rotation speed of the drum, and/or the conveyance rate of the fan.

In addition of deactivating the compressor and reducing of at least one of the drum rotational speed, the fan rotational speed, and/or the drying air flow rate, it may be provided to activate a cooling air fan for cooling the compressor. Preferably the rotation speed of the cooling air fan is reduced as compared to a 'basic' drying program and/or is lower as the nominal or maximum speed for further noise reduction. Preferably a or the compressor cooling fan is a variable speed fan that can be rotated at least at two different rotation speeds which are not zero. The 'variable' speed fan means that motor driving the fan has the variable speed and/or a power device providing the power to the fan motor can deliver two different (average) powers to the fan motor.

Generally herein, e.g. specifically for the fan speed and/or the drum speed (but presently mechanically not recommended for compressor), a 'reduced' rotation speed or a 'reduced' conveyance rate can be set by the corresponding component (fan/drum) in that it is periodically activated and deactivated in a ratio of activation/deactivation such that in average at a high duty ratio (time duration of being activated divided by time duration of the overall period) a higher rotation speeds/conveyance rates are achieved as compared to low duty ratio of activation/deactivation. E.g. the motor is driven by pulse width modulated (PWM) or frequency modulated (FM) power supply (e.g. inverter).

Preferably the temperature sensor adapted to detect the temperature of the heat pump system is arranged at one or more of the following positions of the heat pump system: a) an outlet of the first heat exchanger for detecting the refrigerant temperature, b) an outlet of the compressor for detecting the refrigerant temperature, c) the compressor for detecting the compressor temperature, d) the second heat exchanger for detecting the refrigerant temperature, e) an expansion device arranged between the second and first heat exchanger for detecting the refrigerant temperature, f) in the air channel between the first heat exchanger and the at least one air inlet at the drum for detecting the drying air temperature, g) in the air channel between the at least one outlet at the drum and the second heat exchanger for detecting the drying air temperature, or h) a first temperature sensor is arranged in the air channel between the first heat exchanger and the at least one air inlet at the drum for detecting a first drying air temperature and a second temperature sensor is arranged in the air channel between the at least one air outlet at the drum and the second heat exchanger for detecting a second drying air temperature, wherein the monitored temperature is the temperature difference between the first and second drying air temperature. In case of providing two or more temperature sensors, the difference or any other combination of the temperatures detected at different positions can be combined. Some of the above temperatures are preferably indicating (essentially) the temperature of the refrigerant in the heat pump system.

In an embodiment, during the time before the temperature being at or above the first threshold value (e.g. in the above mentioned first drying phase), the drying program is performed by: a) the compressor being activated, b) the drying air fan is activated, c) the drum is rotated, and d) a or the compressor cooling fan being deactivated. Preferably the 'activated' means that drying air fan is operated at nominal (e.g. maximum) rotation speed and/or is rotated in the first rotation direction and/or the drum is rotated at nominal speed. 'Deactivated' means that the corresponding motor does not drive the component. Preferably the 'time before' means that the respective operation is provided the most time duration before detecting the first threshold value and/or the time period immediately before detecting the first threshold value.

Generally, when no separate motor for drying air fan and drum is provided, the drum and fan rotation speeds are synchronized. Further preferably a variable speed drum motor and/or a variable speed fan motor are provided.

In the time period before detecting the first threshold value, preferably one or more of the following applies: the compressor is operated at a first (average) rotation speed of compressor motor rotation and/or the drying air fan is operated at a first (average) rotation speed of fan motor rotation and/or the drum is rotated at first (average) and/or maximum rotation speed of drum motor rotation and/or the drying air fan is operated at a first (average) conveyance rate (as noted conveyance rate may depend on rotation direction of motor and thus fan). Where applicable, the first operation speed(s)/conveyance rate during the first drying phase (before reaching at or above the first threshold value) are higher than the second operation speed(s)/conveyance rate at the second drying phase, respectively, where the speed(s)/conveyance rate are reduced.

In an embodiment, the drying air fan is driven by a or the motor independent of a or the motor driving the drum and when the temperature of the heat pump system is at or above the first threshold value, then: a) the compressor is deactivated, b) the compressor cooling fan is activated, c) the drying air fan is deactivated, and d) the drum is rotated or is stopped.

Preferably, when the temperature of the heat pump system is at or above the first threshold value, the drum is rotated by one or more of: a) at the same rotation speed as before detecting that the temperature is at or above the first threshold value, b) at a reduced rotation speed as compared to the rotation speed before detecting that the temperature is at or above the first threshold value, and c) at a reduced duty ratio as compared to the duty ratio before detecting that the temperature is at or above the first threshold value. Preferably the 'reduced' speed and speed 'before' relates to the respective maximum rotation speed and/or average rotation speed.

Preferably, when the temperature of the heat pump system is at or above the first threshold value, the fan is driven by a or the motor independent of a or the motor driving the drum and:
a) the compressor is deactivated, b) the compressor cooling fan is activated, c) the drum rotation is deactivated or the drum is stopped, and d) the drying air fan is operated. Additionally or alternatively, the drying air fan is rotated by one or more of: at a reduced maximum rotation speed as compared to the rotation speed before detecting that the temperature is at or above the first threshold value, and/or at a reduced duty ratio as compared to the duty ratio before detecting that the temperature is at or above the first threshold value, or the drum rotation is stopped.

In an embodiment, a or the motor for driving the compressor cooling fan is a variable speed motor and the method further comprises: receiving a user-input indicating the option silent-mode or night-mode for operating the dryer; and
a) if the user-input indicates such mode selection by the user, operating, at least for predetermined periods of the drying program, the compressor cooling fan at a second speed in case the compressor cooling fan is activated, and
b) if the user-input indicates that such mode was not selected by the user, operating the compressor cooling fan at a first speed in case the compressor cooling fan is activated; wherein the first speed is higher than the second speed. Preferably during the silent-mode or night-mode, the compressor cooling fan is not operated always with the reduced second speed.

Generally, the silent-mode or night-mode for this embodiment and of the following embodiments is applicable for the case that (both possible):
a) An available drying program is modified in its control such that one or more components (drying air fan and/or drum and/or compressor and/or compressor cooling fan) are operated such that the sum of the noise emission of these components is reduced (e.g. modified basic program, but running as this basic program with the additional option 'night-mode' or 'silent-mode'). This can be available for all or for selected ones of the basic programs and the result is that as compared to those basic programs the noise emission is reduced.
b) In addition or alternatively to the (modifiable or non-modifiable) basic programs an dedicated silent-mode or night-mode program is provided in which - as compared to the basic programs - the noise emission of the one or more components (drying air fan and/or drum and/or compressor and/or compressor cooling fan) is reduced as the standard measure.

In an embodiment, the motor for driving the compressor is a variable speed motor and the method further comprises: receiving a user-input indicating the option silent-mode or night-mode for operating the dryer; and
a) if the user-input indicates such mode selection by the user, operating, at least for predetermined periods of the drying program, the compressor at a second speed in case the compressor is activated, and
b) if the user-input indicates that such mode was not selected by the user, operating the compressor at a first speed in case the compressor is activated; wherein the first speed is higher than the second speed. Preferably during the silent-mode or night-mode, the compressor is not operated always with the reduced second speed.

Preferably for the above, where the variable speed motor is provided for the drum and/or drying air fan and/or cooling air fan, the reduced second speed which is applied in the second drying phase is lower than the first speed which is applied in the first drying phase. Preferably the transition from the first to the second drying phase is when the temperature of the heat pump system is (the first time) at or above the first threshold value. The 'speed' may relate to the maximum speed in the first and/or second drying phase and/or the temporal average of the 'speed' during the first and/or second period. Such 'reduction' of speed relates to the drum and/or drying air fan (and/or cooling air fan).

The dryer may be implemented by a washer dryer providing at least one washing program. Preferably then a tub is arranged in the cabinet and the drum is arranged in the tub; the at least one outlet of the drum is at least one outlet of the tub, or the at least one inlet of the drum is at least one inlet of the tub, or the at least one outlet of the drum is at least one outlet of the tub and the least one inlet of the drum is at least one inlet of the tub; and the fan is driven by a or the motor independent of a or the motor driving the drum. For example the drum and the fan can be rotated/activated independent of each other and - if this option provided -the speed and/or direction of rotation of the drum and the drying air fan can be adjusted independent each other.

In an embodiment, at least one of the following parameters for controlling the drying program: a) the temperature value of the first threshold value, b) the value of the reduced fan rotational speed (e.g. second speed), c) the value of the reduced fan conveyance rate (e.g. second conveyance rate), d) the value of the reduced drum rotational speed (e.g. second speed), e) the value of the reduced compressor cooling fan speed (e.g. second speed), f) the delay time, if the deactivation of the compressor is delayed after detection that the temperature of the heat pump system is at or above the first threshold value, g) the temperature value of the second threshold value, and h) one or more parameters for operating the dryer after the temperature value is at or below the second threshold value;
are depending on one or more of the following: m) a laundry treatment program or laundry treatment options as set by a user via an input device of the dryer, n) a laundry type as set by a user or as estimated by the dryer, o) the duration of the laundry treatment program set by a user or as estimated by the dryer, p) in case that the drying program is part of a washing and drying program, an estimation of the water content in the laundry at the beginning of a drying program based on the laundry weight difference between the dry laundry weight and the laundry wet weight at the end of the washing program, q) the amount or weight of laundry (60) to be dried, r) the current degree of humidity of the laundry, s) the temperature of the drying air, and t) the duration since the start of the drying.

Reference is made in detail to preferred embodiments of the invention, examples of which are illustrated in the accompanying figures, which show:
- Fig. 1: a perspective view of a laundry dryer,
- Fig. 2: a schematic overview of some components of the dryer of Fig. 1,
- Fig. 3: a block diagram depicting some of the components of the dryer of Fig. 1 providing signals to a control unit and/or being controlled by the control unit,
- Figs. 4a - 4d: time diagrams showing the temporal behavior of the refrigerant temperature and some temperature-controlled parameters, and
- Figs. 5a - 5c: time diagrams of control parameters according to another embodiment.

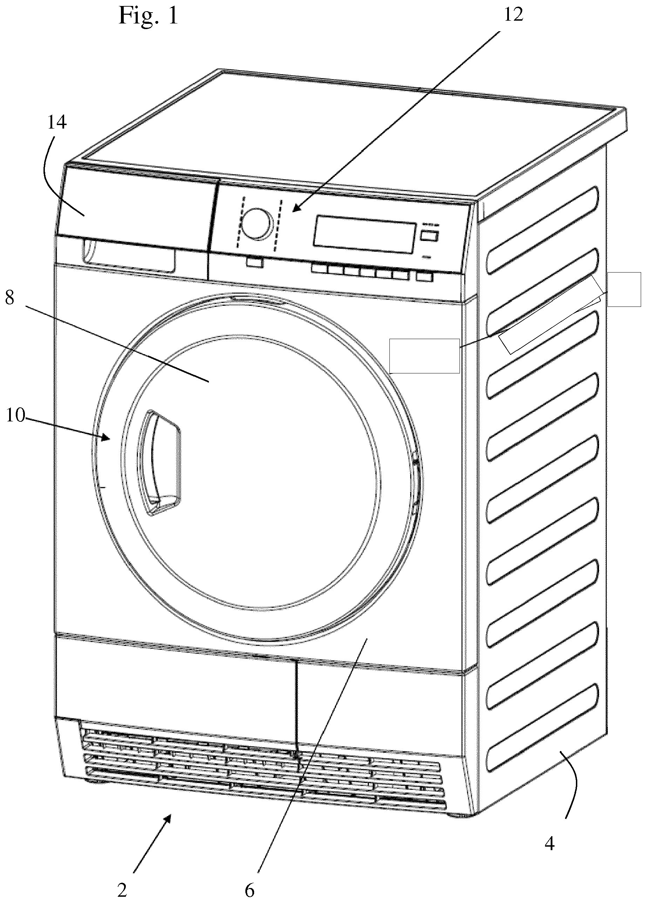

Fig. 1 shows a perspective outer appearance of an exemplary laundry dryer 2. In this embodiment, the laundry dryer is a dryer only, but in alternative embodiments the dryer function according to the control method is implemented by a washer-dryer in which the rotatable drum is arranged in a tub and which provides a washing arrangement including (for example) a detergent dispenser, a heater for heating wash liquid and a drain pump for draining out of the liquids.

As shown in Fig. 1, the laundry dryer 2 has an outer housing 4 or cabinet including a front wall 6. At the front wall 6 a loading opening 8 is provided which is closed by a door 10. In the depicted embodiment the dryer is a front-loading dryer having a horizontal drum rotation axis, but in alternative embodiments the drum may be inclined relative to the horizontal and vertical directions, or the dryer may be a vertical rotation axis dryer in which the drum rotates around a vertical axis and where top-loading is provided.

The dryer 2 has a control panel 12 arranged at the upper region of the front wall 6 and a condensate drawer 14 in which the condensate collected from drying is stored until removal by the user.

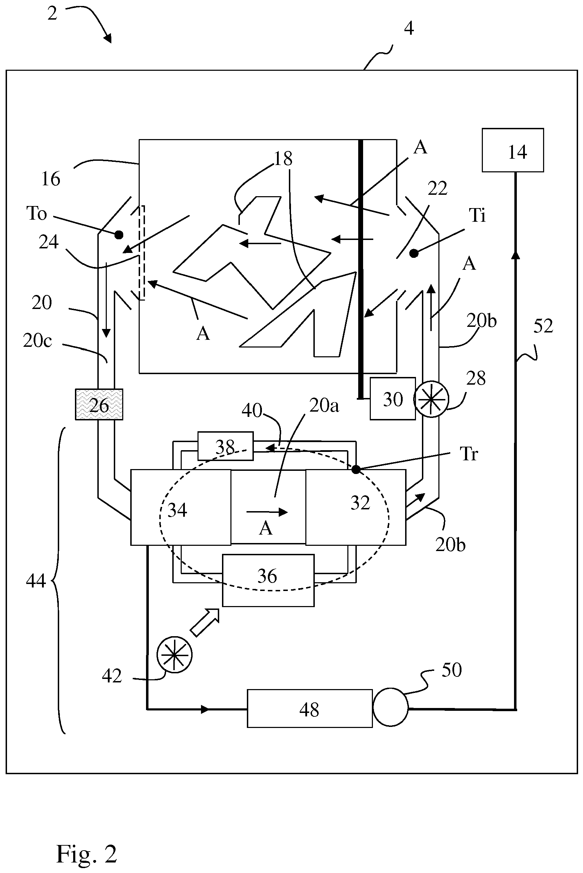

In the schematic diagram of components shown in Fig. 2, the drum 16 is arranged inside the housing 4, in which laundry 18 is received. The flow of drying air A is indicated by the arrows, wherein the drying air A leaves the drum 16 at an outlet 24 and enters a process air channel 20 at the front channel 20c. By the front channel 20c the drying air is guided through a fluff filter element 26 towards a second heat exchanger 34 and a first heat exchanger 32. The first and second heat exchangers 32, 34 are arranged in a battery channel 20a of the process air channel 20. The first heat exchanger 32 is a condenser which heats the drying air and the second heat exchanger 34 is an evaporator which cools the drying air for humidity removal in form of condensed water.

The drying air leaving the first heat exchanger 32 is entering a rear channel 20b in which a drying air fan 28 is arranged which conveys the drying air. The fan 28 is driven by a motor 30 which at same time drives the rotation of the drum 16. In the depicted embodiment, a belt driven by the motor 30 is wound around the drum mantel for driving the fan. In the depicted embodiment, in which the single motor 30 drives the fan 28 as well as the drum 16, the drum and fan 28 are driven in a synchronous manner according to the gear ratio. Synchronous rotation includes a forward and backward rotation according to the motor forward and backward rotation. As an example, the fan speed is identical to the motor speed as the fan is arranged on an axis of the motor 30, while via the belt the rotation of the motor is gear-reduced in an exemplary ratio of motor rotation speed/drum rotation speed of 50:1.

The first and second heat exchangers 32, 34 are part of a heat pump system 44 which further comprises an expansion device 38 and a compressor 36. In the heat pump system 44 a refrigerant loop 40 is formed, wherein the refrigerant pumped by the compressor 36 passes first the condenser 32, is forwarded to the expansion device 38 from where it expands into the second heat exchanger 34 and from where it is sucked into the compressor 36. Heat can be removed from the heat pump system (in addition to the heat deposited in the drying air and laundry for drying the laundry) by activating a cooling air fan 42 which provides a flow of cooling air from the outside of the cabinet 4 towards the outer surfaces of the compressor 36. After passing the compressor 36, the cooling air is exhausted out of the cabinet 4.

The condensate that formed at the evaporator 34 flows down and collects in a condensate collector 48. From the condensate collector 48 the condensate is pumped by a draining pump 50 through a drain conduit 52 into the condensate drawer 14 from where it can be removed by the user as mentioned above.

At the outlet 24 of the drum 16 a temperature sensor is provided which detects the outlet temperature To of the drying air. At the inlet 22 of the drum 16 another temperature sensor is provided which detects the inlet temperature Ti of the drying air. At the outlet of the condenser 32 a temperature sensor is provided which detects the refrigerant temperature Tr at this position.

In case the dryer 2 is a washer-dryer as mentioned above, preferably the outlet of the drying air is arranged in a gasket which is provided between the tub surrounding the drum and the front wall 6 of the washer-dryer. The inlet 22 of the drying air is then provided at an upper and rear side position of the tub from where the drying air enters the drum 16. Such drum has a perforated back wall and/or peripheral drum mantel through which the drying air enters into the drum. Of course, the drying air flow can also be reverted in view of the inlet/outlet of the washer-dryer as described here.

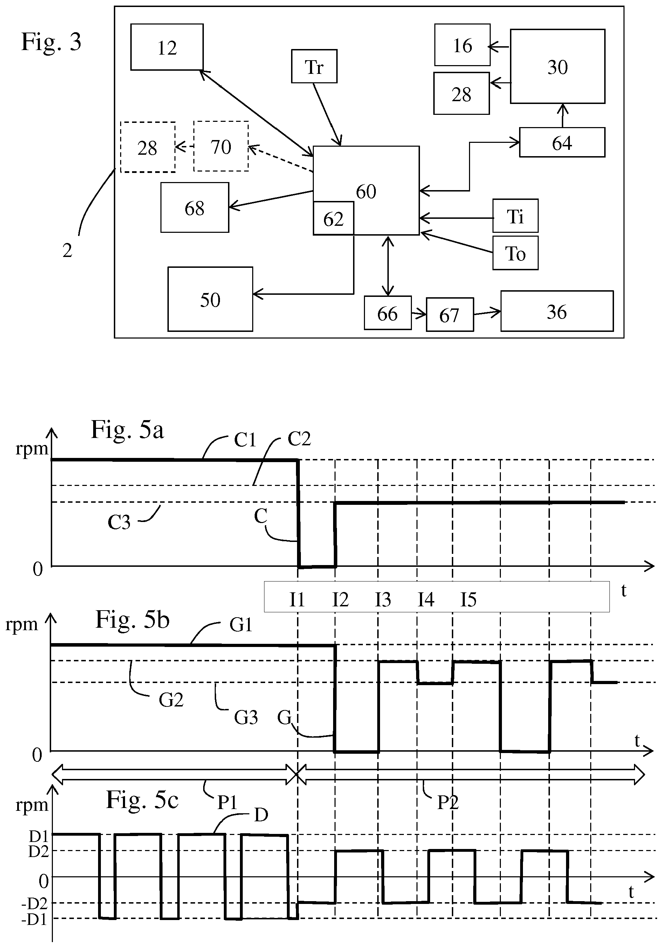

Fig. 3 is a block diagram of components of the dryer 2 that interact for enabling a control unit 60 to control the drying operation or program. The control unit 60 has a memory 62 in which program parameters and look-up tables are stored such that the control unit, by retrieving corresponding data from the memory 62, can control different basic drying programs preferably under conditions as set by the user via option selectors at the control panel 12. Such user-settable options are for example: the final drying degree, the load of the laundry loaded by the user and inputted by him/her, the type of laundry, the duration of drying, a silent- or night-mode option by which the operation noise can be reduced by corresponding input of the user under the control of the control unit, and/or an energy option.

The control unit 60 receives the signals from the sensors for the refrigerant temperature Tr, the inlet temperature Ti of the drying air, and the outlet temperature To of the drying air. The control unit sends control signals to a drum motor inverter 64 and receives operation parameters therefrom. The drum motor inverter 64 supplies the power to the motor 30 driving the drum 16 and the drying air fan 28. The control unit 60 sends control signals to a compressor motor inverter 66 and receives operation parameters therefrom. The inverter 66 powers a compressor motor 67 for driving the compressor 36. Further, the control unit 60 controls the draining pump 50, a motor 68 for driving the cooling air fan 68 and optionally, if a separate motor 70 is provided for the drying air fan 28, the drying air fan motor 70.

In case of the dryer being a washer-dryer, normally the separate motor 70 is provided, such that the rotation speed of the drying air fan 28 can be set by the control unit 60 independent of the drum rotation speed via inverter 64 and drum motor 30. Of course, if the separate motor 70 is provided, the motor 30 does not drive the drying air fan 28.

In the following two embodiments of controlling a drying program are described. The drying programs described here as examples implement a modification of available basic drying programs provided by the control unit 60. The modification of the basic drying program is provided in response the user having selected the option silent-mode or night-mode. By applying this option the basic drying program is executed under the condition that the overall operation noise of the dryer 2 (or washer-dryer) is reduced as compared to the operation noise generated when executing the (unmodified) basic drying program. In the following, it is described how as compared to the basic program, in particular in a second drying phase P2 as compared to a first drying phase PI, the noise is reduced in that the operation speed and/or operation mode of some of the components is reduced.

Alternatively or additionally it may be provided that the user, instead of activating the night-mode or silent-mode, can select via a program selector provided at the control panel 12 a separate (dedicated) drying program which does not represent a modification of a basic program, but which is an independent drying program that reduces noise and provides more user flexibility and a more stringent noise reduction (as compared to activate the night- or silent-mode via an option selector).

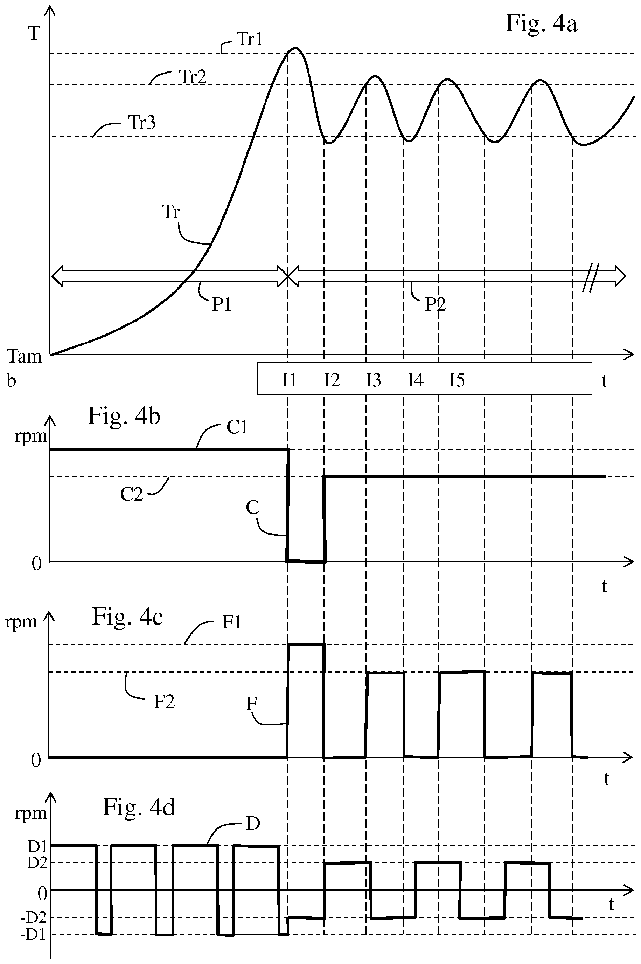

Figs. 4a - 4d show an embodiment in which the user activates the option of noise-mode via an option selector provided at the control panel 12. Having activated this option, at the beginning the drying program runs at if it is a basic program, which is here without a noise reduction over the basic program during the first phase P1 of drying. This is acceptable for example if the user immediately starts the dryer and goes to bed after some minutes (the time required for executing the first phase PI) before he/she is falling asleep.

In the first phase P1 until to the instance I1, the control unit 60 provides that the compressor 36 operates at nominal speed C1 which is the maximum speed of the compressor or may even be a booster speed which is used during the warm-up phase for bringing the heat pump system 44 in an operation state where an efficient drying operation can be achieved. Fig. 4b shows the compressor speed C which of course is the speed of the compressor motor 67.

Generally herein, fan speed, compressor speed and drum speed are used synonymously for the motor speed of the respective motor. The forward rotation direction may also be denoted as clockwise rotation direction or first rotation direction. The backward rotation can also be denoted as counter clockwise rotation direction or second rotation direction.

Fig. 4c shows the fan speed F of the cooling air fan 42 which conveys the outside air for cooling the compressor 36. Fig. 4d shows the rotation speed D of the drum 16 which is driven by the motor 30. As mentioned, the motor 30 can rotate in forward and backward direction such that correspondingly the drum 16 is driven in the forward direction (D positive) or in the backward direction (D negative). If the terms "maximum speed" or "speed reduction" are used, this refers to the absolute value if positive and negative rotation speeds are available. In the embodiment of the common motor 30 for fan 28 and drum 16, the speed and the direction of the drum rotation proportionally corresponds with the respective gear reduction ratio to the fan rotation speed and direction of the drying air fan 28.

Due to the constructional design of the fan 28 and if the motor 30 (this also applies if separate motor 70 is provided with a backward rotation) rotates in the backward direction, the air conveyance rate is lower than if the fan 28 is rotated in forward rotation direction at the same absolute value of rotation speed. This means that in forward rotation of the fan 28 the conveyance rate is higher as if rotating it with the same absolute rotation speed in the backward direction. Although nominally and absolutely the same rotation speed is used, the noise is also reduced in backward rotation of the fan as the noise caused by the flow of drying air is reduced due to lower conveyance rate.

Fig. 4a shows the temporal development of the refrigerant temperature Tr since the start of the drying program from ambient temperature Tamb. In the first drying phase P1 the refrigerant temperature Tr rises from Tamb to and a little above a first temperature threshold Tr1. At the instance I1, where Tr exceeds Tr1, the compressor 36 is switched off or deactivated as shown in Fig. 4b by C = 0. As shown in Fig. 4c, when the compressor is switched off, the drying air fan 42 is switched on or activated to rotate at the maximum nominal speed F1. Also as shown in Fig. 4d at instance I1 the drum rotation speed D is reduced from the maximum or nominal speed (in a dryer - a washer-dryer has higher maximum drum rotation speeds). Here the absolute value of the speed is reduced from the first rotation speed D1 (-D1 at I1) to the reduced rotation speed D2 (-D2 at II). At I1 also the cooling air fan 42 is activated and the overall noise emission is reduced due to switching off of the compressor and reducing the drum rotation speed D. As the drying air fan 28 is also rotated with the slower speed (gear ratio with drum rotation), noise emission by the flowing drying air is also reduced.

After the instance I1 the refrigerant temperature Tr is going down until it is falling below the third threshold Tr3 at the instance I2. At the instance I2, the compressor 36 is activated again, however with a lower speed C2 as compared to the initial nominal or booster speed C1. From instance I2 the compressor is continuously operated at the lower rotation speed C2 thereby reducing noise emission. At the instance I2 the cooling air fan 42 is deactivated.

For the drum rotation speed D as shown in Fig. 4d it is to be noted, that, except the reduction of the speed from D1 to D2 at the instance I1, the switching over between the forward and backward rotation direction is independent of the instances I1, I2... Only at the instance I1, which is the transition from the first drying phase P1 to the second drying phase P2, the maximum rotation speed is reduced form D1, - D1 to D2, -D2 and the ratio of rotating the drum in the forward direction and of rotation the drum in the backward direction is lowered. In the example shown the ratio of forward to backward rotation direction of the drum is reduced from about 4:1 to about 1:1. As mentioned, the air conveyance rate of the drying air fan 28 is not only reduced by reducing the speed of motor 30, but also by rotating the fan 28 in the backward direction. Thus, in the second drying phase P2 in average a reduction of conveyance rate is achieved by lowering the forward/backward rotation direction ratio and by reducing the nominal rotation speed (proportional to D).

As can be seen from Fig. 4a, during the second drying phase P2 the threshold Tr2 is a reduced threshold as compared to the threshold Tr1 used for switching on the cooling air fan 42. For example at the instances I3 and I5 the fan 42 is activated and rotated at a reduced fan rotation speed F2 which is used from then onward, if the fan 42 is activated. As can be seen by comparing Fig. 4a and Fig. 4c, the lower threshold Tr3 for deactivating the cooling air fan 42 is maintained during the second drying phase P2.

Due to the reduction of the compressor speed to C2, during the second drying phase P2 the compressor 36 needs no longer to be deactivated - except to the first deactivation in the period I1-I2 following the transition from the first to the second drying phase P1, P2. Thus, in this embodiment, during the second drying phase P2 noise reduction is achieved by reducing the compressor speed from C1 to C2, operating the cooling air fan 42 at reduced rotation speed F2 (except during the period I1-I2 where the cooling fan is operated at the nominal speed F1), reducing the absolute drum rotation speed D from D1 to D2, by reducing the absolute value of drying air fan rotation speed (proportional to D), and by reducing the conveyance rate of the drying air fan 28 further by increasing the periods of backward rotation direction relative to the periods of forward rotation direction (reducing the ratio of clockwise/counterclockwise rotation).

Figs. 5a - 5c show another embodiment of operating the dryer 2 when providing the separate motor 70 for driving the drying air fan 28 - for example when the dryer 2 is implemented by a washer-dryer. For Figs. 5a - 5c the same refrigerant temperature curve Tr as shown in Fig. 4a is applicable and the instances I1, I2... correspond to the respective instances, i.e. the instances where the refrigerant temperature Tr exceeds the first temperature threshold Tr1 (I1), undershoots the third temperature Tr3 (I2, I4...), or exceeds the second temperature threshold Tr2 (13, 15...).

In this embodiment, the cooling air fan 42 is not operated at all and stays deactivated through the entire drying program. In this case as compared to the embodiment shown in Figs. 4a - 4d, no heat is removed from the heat pump system by cooling the compressor 36. Instead in this embodiment, in the second drying phase P2 the rotation speed of the compressor is reduced to a third rotation speed C3 which is lower than the reduced rotation speed C2 used for the compressor in Fig. 4b during the second drying phase P2. Thereby, the heat deposited by the compressor in the heat pump system 44 is reduced. In this embodiment, the "cooling function" of the non-activated blower 42 is taken over by the drying air fan 28 driven by the separate motor 70. Namely, as this is illustratively indicated by the 'waves' of the temperature Tr curve in Fig. 4a during phase P2 the flowing drying air conveyed by the fan 28 also removes heat from the heat pump system 44 and in consequence Tr falls, when the fan 28 is activated or operating at the higher speed G2.

As shown in Fig. 5b, during the first drying phase PI, the fan 28 is driven by motor 70 at nominal or maximum speed G1 which is continued until the instance I2 where the refrigerant Tr has been cooled down from Tr1 to Tr3. Thereafter, in the period 12-13, the drying air fan 28 is stopped (rotation speed G= 0) and when the refrigerant temperature Tr has exceeded the second threshold Tr2 at the instance 13, the blower 28 rotates at a reduced rotation speed G2. At instance I4, when the refrigerant Tr is falling below the third threshold level Tr3, the blower speed is further reduced from G2 to G3 in the period I4-I5. For equilibrating the heat pump system 44 and keeping it in optimized and energy efficient state with the compressor speed C at the reduced speed C3, the drying air fan is intermittently driven at the two reduced speeds G2 and G3 or even deactivated G = 0. Preferably it is repeatedly driven in the sequence G=0, G2 and G3 triggered by Tr > Tr2 and Tr < Tr3.

As can be seen from Fig. 5c, as the drum 16 can be rotated independent of the fan 28, the drum rotation speed D is the same as described above for Fig. 4d.

In particular, in the second embodiment shown in Fig. 5a - 5c, the drying time is extended as of course a lower energy is deposited by the rotating the compressor at reduced speed C3. However, noise reduction is significant - for example the cooling air blower 42 has not to be operated at all. Nonetheless and despite the extended drying time, the total energy consumption in this embodiment is significant lower than in the basic drying program or as compared to the embodiment shown in the Figures.

**Reference Numeral List**

| | | | |
|---|---|---|---|
| 2 | laundry dryer | 62 | memory |
| 4 | housing / cabinet | 64 | drum motor inverter |
| 6 | front wall | 66 | compressor motor inverter |
| 8 | loading opening | 67 | compressor motor |
| 10 | door | 68 | cooling air fan motor |
| 12 | control panel | 70 | (drying air fan motor) |
| 14 | condensate drawer | | |
| 16 | drum | A | process air flow |
| 18 | laundry | C | compressor motor rotation speed |
| 20 | process air channel | C1, C2, C3 | first, second, third compressor speed |
| 20a | battery channel | | |
| 20b | rear channel | D | drum rotation speed |
| 20c | front channel | D1, D2 | first, second drum rotation speed |
| 22 | inlet | F | cooling air fan speed |
| 24 | outlet | F1, F2 | first, second cooling air fan rotation speed |
| 26 | fluff filter element | | |
| 28 | fan | G | drying air fan motor speed |
| 30 | motor | G1, G2, G3 | first, second, third fan motor speed |
| 32 | first heat exchanger | | |
| 34 | second heat exchanger | In | first, second, ... instance |
| 36 | compressor | PI, P2 | first, second drying phase Tamb ambient temperature |
| 38 | expansion device | | |
| 40 | refrigerant loop | Ti | drying air inlet temperature sensor |
| 42 | cooling air fan | To | drying air outlet temperature sensor |
| 44 | heat pump system | Tr | refrigerant temperature sensor / temperature |
| 48 | condensate collector | | |
| 50 | draining pump | Tr1, Tr2, Tr3 | refrigerant temperature threshold |
| 52 | drain conduit | | |
| 60 | control unit | | |

## Claims

1. Method for operating a heat-pump dryer (2) during a drying program, the dryer comprising:
a cabinet (4),
a drum (16) arranged within the cabinet (4) and being adapted to receive laundry (18) for drying the laundry within the drum using drying air,
an air channel (20) adapted to guide the drying air from at least one air outlet (24) at the drum (16) to at least one air inlet (22) at the drum for providing an air circulation arrangement,
a drying air fan (28) adapted to convey the drying air through the air circulation arrangement,
a heat pump system (44) comprising a first heat exchanger (32) adapted to heat the drying air, a second heat exchanger (34) adapted to cool the drying air for humidity condensation, and a compressor (36) adapted to circulate refrigerant through the first and second heat exchangers, and
a temperature sensor adapted to detect a temperature (Tr) of the heat pump system (44),
wherein the method comprises:
starting a drying program, and
monitoring the temperature (Tr) of the heat pump system (44),
wherein the drying program has a first drying phase (P1) which is before the temperature (Tr) of the heat pump system reaches at or above a first threshold value, and a second drying phase (P2) after the first drying phase,
wherein the method comprises further operating the drying air fan/drum at a first speed during the first drying phase, and if the temperature (Tr) of the heat pump system is at or above a first threshold value (Tr1), deactivating the compressor (36),
**characterized in that**
the motor (30, 70) for driving the drying air fan (28)/drum (16) is a variable speed motor and the method further comprises:
receiving a user-input indicating the option silent-mode or night-mode for operating the dryer, and
if the user-input indicates such mode selection by the user and in the second drying phase (P2), operating, at least for predetermined periods of the drying program, the drying air fan/drum at a second speed (G2, G3; D2, -D2) in case the drying air fan/drum is activated, and
if the user-input indicates that such mode was not selected by the user and in the second drying phase (P2), operating the drying air fan/drum at a first speed (G1; D1, -D1) in case the drying air fan/drum is activated,
wherein the absolute value of the first speed (G1; D1, -D1) is higher than the absolute value of the second speed (G2; D2, -D2).

2. Method according to claim 1, wherein the drying air fan (28) is driven by a motor (70) independent of a motor (30) driving the drum (16), and wherein the method comprises:
setting, at least for one or more predetermined periods (P2) of the drying program, the rotation speed (D) or the maximum rotation speed of the drum in dependency of the temperature (Tr) of the heat pump system (44).

3. Method according to claim 1 or 2, wherein, if it is detected that the temperature (Tr) of the heat pump system (44) is at or above the first threshold value (Tr1), the compressor (36) is deactivated after a predetermined delay time.

4. Method according to claim 1, 2 or 3, wherein in addition to deactivating the compressor (36) and reducing of at least one of the drum rotational speed (D), the drying air fan rotational speed (G2, G3), and the drying air flow rate, a fan (42) for cooling the compressor (36) is activated.

5. Method according to any of the previous claims, wherein the end (I2) of a period (I1-I2), during which the compressor (36) is stopped and during which at least one of the drum rotation speed (D), the fan rotational speed (G2, G3), and the flow rate is reduced, is determined by using one or more of the following conditions:
- when a predetermined time period has lapsed,
- the temperature (Tr) of the heat pump system (44) is at or below a second threshold value (Tr3),
- the temperature (Ti, To) of the drying air is at or below a first drying air threshold value,
- a temperature difference (Ti-To) as detected by two temperature sensors arranged at two different positions along the drying air circulation arrangement (16, 20) is at or is below a second drying air threshold value, and
- a temperature difference between a drying air temperature (Ti, To) at the time of deactivating the compressor (36) and the current drying air temperature is at or is above a third drying air threshold value.

6. Method according to claim 5, wherein, when the end (I2) of the period (I1-I2) has been determined or when the period is lapsed, one or more of the following steps are implemented:
- the compressor (36) is activated again,
- the rotation speed (F) of a or the compressor cooling fan (42) is reduced or the compressor cooling fan is deactivated or the duty rate of activating the compressor cooling fan is reduced,
- one or more of the following are increased: the drying air fan rotation speed (G), the drum rotation speed (D), and the conveyance rate of the drying air fan (28), and
- one or more are restored to the operation values at the time immediately before starting the period (I1-I2): the rotation speed (F) of the compressor cooling fan (42), the rotation speed (D) of the drum (16), and the conveyance rate of the drying air fan (28).

7. Method according to any of the previous claims, wherein a or the compressor cooling fan (42) has a variable speed fan motor that can be rotated at least at two different rotation speeds (F) which are not zero.

8. Method according to any of the previous claims, wherein the temperature sensor adapted to detect the temperature (Tr) of the heat pump system (44) is arranged at one of the following positions of the heat pump system:
- an outlet of the first heat exchanger (32) for detecting the refrigerant temperature (Tr),
- an outlet of the compressor (36) for detecting the refrigerant temperature,
- the compressor (36) for detecting the compressor temperature,
- the second heat exchanger (34) for detecting the refrigerant temperature,
- an expansion device (38) arranged between the second and first heat exchanger (32, 34) for detecting the refrigerant temperature,
- in the air channel (20) between the first heat exchanger (32) and the at least one air inlet (22) at the drum (16) for detecting the drying air temperature (Ti),
- in the air channel (20) between the at least one outlet (24) at the drum and the second heat exchanger for detecting the drying air temperature (To), or
- a first temperature sensor is arranged in the air channel (20) between the first heat exchanger and the at least one air inlet at the drum for detecting a first drying air temperature (Ti) and a second temperature sensor is arranged in the air channel between the at least one air outlet at the drum and the second heat exchanger for detecting a second drying air temperature (To), wherein the monitored temperature is the temperature difference (Ti-To) between the first and second drying air temperature.

9. Method according to any of the previous claims, wherein during the time before the temperature (Tr) being at or above the first threshold value (Tr1), the drying program is performed by:
- the compressor (36) being activated,
- the drying air fan (28) is activated,
- the drum (16) is rotated, and
- a or the cooling air fan (42) being deactivated.

10. Method according to any of the previous claims, wherein the drying air fan (28) is driven by a or the motor (70) independent of a or the motor (30) driving the drum (16) and when the temperature (Tr) of the heat pump system (44) is at or above the first threshold value (Tr1), then:
- the compressor (36) is deactivated,
- the compressor cooling fan (42) is activated,
- the drying air fan (28) is deactivated, and
- the drum (16) is rotated or is stopped.

11. Method according to claim 10, wherein the drum (16) is rotated by one or more of:
- at the same absolute value of rotation speed (D1, - D1) as before detecting that the temperature is at or above the first threshold value (Tr1),
- at a reduced absolute value of rotation speed (D2, -D2) as compared to the absolute value of rotation speed (D1, -D1) before detecting that the temperature is at or above the first threshold value (Tr1), and
- at a reduced duty ratio as compared to the duty ratio before detecting that the temperature is at or above the first threshold value (Tr1).

12. Method according to any of the previous claims, wherein the drying air fan (28) is driven by a or the motor (70) independent of a or the motor (30) driving the drum (16) and when the temperature of the heat pump system (44) is at or above the first threshold value (Tr1), then:
- the compressor (36) is deactivated,
- the compressor cooling fan (42) is activated,
- the drum rotation is deactivated or the drum is stopped, and
- the drying air fan (42) is operated.

13. Method according to claim 12, wherein the drying air fan (28) is rotated by one or more of:
- at a reduced maximum rotation speed (G2, G3) as compared to the rotation speed (G1) before detecting that the temperature is at or above the first threshold value (Tr1), and
- at a reduced duty ratio as compared to the duty ratio before detecting that the temperature is at or above the first threshold value (Tr1), or the drum rotation is stopped.

14. Method according to any of the previous claims, wherein the motor (68) for driving the compressor cooling fan (42) is a variable speed motor and the method further comprises:
receiving a user-input indicating the option silent-mode or night-mode for operating the dryer, and
if the user-input indicates such mode selection by the user, operating, at least for predetermined periods of the drying program, the compressor cooling fan (42) at a second speed (F2) in case the compressor cooling fan is activated, and
if the user-input indicates that such mode was not selected by the user, operating the compressor cooling fan at a first speed (F1) in case the compressor cooling fan is activated,
wherein the first speed (F1) is higher than the second speed (F2).

15. Method according to any of the previous claims, wherein the dryer (2) is implemented by a washer-dryer providing at least one washing program,
wherein a tub is arranged in the cabinet (4) and the drum (16) is arranged in the tub,
wherein the at least one outlet (24) of the drum is at least one outlet of the tub, or the at least one inlet (22) of the drum is at least one inlet of the tub, or the at least one outlet (24) of the drum is at least one outlet of the tub and the least one inlet (22) of the drum is at least one inlet of the tub, and
wherein the drying air fan (28) is driven by a or the motor (70) independent of a or the motor (30) driving the drum (16).

16. Method according to any of the previous claims, wherein at least one of the following parameters for controlling the drying program:
- the temperature value of the first threshold value (Tr1),
- the value of the reduced drying air fan rotational speed (G2, G3),
- the value of the reduced drying air fan conveyance rate,
- the absolute value of the reduced drum rotational speed (D2, -D2),
- the value of the reduced compressor cooling fan speed (F2),
- the delay time, if the deactivation of the compressor (36) is delayed after detection that the temperature of the heat pump system (44) is at or above the first threshold value (Tr1),
- the temperature value of the second threshold value (Tr2), and
- one or more parameters for operating the dryer after the temperature value is at or below the second threshold value (Tr2); is depending on one or more of the following:
- a laundry treatment program or laundry treatment options set by a user via an input device (12) of the dryer,
- a laundry type as set by a user or as estimated by the dryer,
- the duration of the laundry treatment program set by a user or as estimated by the dryer,
- in case that the drying program is part of a washing and drying program, an estimation of the water content in the laundry at the beginning of a drying program based on the laundry weight difference between the dry laundry weight and the laundry wet weight at the end of the washing program,
- the amount or weight of laundry (18) to be dried,
- the current degree of humidity of the laundry,
- the temperature (Ti, To) of the drying air, and
- the duration since the start of the drying.

## Patentansprüche

1. Verfahren zum Betreiben eines Wärmepumpentrockners (2) während eines Trocknungsprogramms, wobei der Trockner umfasst:
ein Gehäuse (4);
eine Trommel (16), die innerhalb des Gehäuses (4) angeordnet ist und zum Aufnehmen von Wäsche (18) eingerichtet ist, um die Wäsche innerhalb der Trommel unter Verwendung von Trocknungsluft zu trocknen,
einen Luftkanal (20), der zum Führen der Trocknungsluft aus dem mindestens einen Luftauslass (24) an der Trommel (16) zu mindestens einem Lufteinlass (22) an der Trommel eingerichtet ist, um eine Luftzirkulationsanordnung bereitzustellen,
einen Trocknungsluftventilator (28), der zum Fördern der Trocknungsluft durch die Luftzirkulationsanordnung eingerichtet ist,
ein Wärmepumpensystem (44), das einen ersten Wärmetauscher (32), der zum Erwärmen der Trocknungsluft eingerichtet ist, einen zweiten Wärmetauscher (34), der zum Kühlen der Trocknungsluft zur Kondensation von Feuchtigkeit eingerichtet ist, und einen Kompressor (36) umfasst, der zum Zirkulieren von Kühlmittel durch den ersten und den zweiten Wärmetauscher hindurch eingerichtet ist, und
einen Temperatursensor, der zum Detektieren einer Temperatur (Tr) des Wärmepumpensystems (44) eingerichtet ist,
wobei das Verfahren umfasst:
Starten eines Trocknungsprogramms, und
Überwachen der Temperatur (Tr) des Wärmepumpensystems (44),
wobei das Trocknungsprogramm eine erste Trocknungsphase (P1), die vorliegt, bevor die Temperatur (Tr) des Wärmepumpensystems einen ersten Schwellenwert erreicht oder oberhalb von diesem liegt, und eine zweite Trocknungsphase (P2) nach der ersten Trocknungsphase aufweist,
wobei das Verfahren ferner Betreiben des Trocknungsluftventilators/der Trommel mit einer ersten Drehzahl während der ersten Trocknungsphase umfasst, und
wenn die Temperatur (Tr) des Wärmepumpensystems auf einem ersten Schwellenwert (Tr1) oder oberhalb von diesem liegt, der Kompressor (36) deaktiviert wird,
**dadurch gekennzeichnet, dass** der Motor (30, 70) zum Antreiben des Trocknungsluftventilators (28)/der Trommel (16) ein Motor mit variabler Drehzahl ist und das Verfahren ferner umfasst:
Empfangen einer Benutzereingabe, welche die Option Leiser Modus oder Nachtmodus für den Betrieb des Trockners angibt, und
wenn die Benutzereingabe eine derartige Modusauswahl durch den Benutzer angibt und in der zweiten Trocknungsphase (P2) ist, der Trocknungsluftventilator/die Trommel mindestens für vorbestimmte Zeiträume des Trocknungsprogramms mit einer zweiten Drehzahl (G2, G3; D2, -D2) betrieben wird, falls der Trocknungsluftventilator/die Trommel aktiviert ist, und
wenn die Benutzereingabe angibt, dass kein solcher Modus von dem Benutzer ausgewählt wurde, und in der zweiten Trocknungsphase (P2) ist, der Trocknungsluftventilator/die Trommel mit einer ersten Drehzahl (G1; D1, -D1) betrieben wird, falls der Trocknungsluftventilator/die Trommel aktiviert ist,
wobei der Absolutwert der ersten Drehzahl (G1; D1, -D1) höher als der Absolutwert der zweiten Drehzahl (G2; D2, -D2) ist.

2. Verfahren nach Anspruch 1, wobei der Trocknungsluftventilator (28) von einem Motor (70) angetrieben wird, der unabhängig von einem Motor (30) ist, der die Trommel (16) antreibt, und wobei das Verfahren umfasst:
Festlegen, für mindestens einen oder mehrere vorbestimmte Zeiträume (P2) des Trocknungsprogramms, der Rotationsgeschwindigkeit (D) oder der maximalen Rotationsgeschwindigkeit der Trommel in Abhängigkeit von der Temperatur (Tr) des Wärmepumpensystems (44).

3. Verfahren nach Anspruch 1 oder 2, wobei der Kompressor (36), falls detektiert wird, dass die Temperatur (Tr) des Wärmepumpensystems (44) auf dem ersten Schwellenwert (Tr1) oder oberhalb von diesem ist, nach einer vorbestimmten Verzögerungszeit deaktiviert wird.

4. Verfahren nach Anspruch 1, 2 oder 3, wobei zusätzlich zu dem Deaktivieren des Kompressors (36) und dem Reduzieren von mindestens einer von der Rotationsgeschwindigkeit (D) der Trommel, der Rotationsgeschwindigkeit (G2, G3) des Trocknungsluftventilators und der Trocknungsluftflussrate ein Ventilator (42) zum Kühlen des Kompressors (36) aktiviert wird.

5. Verfahren nach einem der vorhergehenden Ansprüche, wobei das Ende (12) eines Zeitraums (11-12), währenddessen der Kompressor (36) gestoppt wird und währenddessen mindestens eine von der Rotationsgeschwindigkeit (D) der Trommel, der Rotationsgeschwindigkeit (G2, G3) des Ventilators und der Flussrate reduziert wird, unter Verwendung von einer oder mehreren der folgenden Bedingungen ermittelt wird:
- wenn ein vorbestimmter Zeitraum verstrichen ist,
- die Temperatur (Tr) des Wärmepumpensystems (44) auf einem zweiten Schwellenwert (Tr3) oder unterhalb von diesem ist,
- die Temperatur (Ti, To) der Trocknungsluft auf einem ersten Trocknungsluftschwellenwert oder unterhalb von diesem ist,
- eine Temperaturdifferenz (Ti-To), wie sie durch zwei Temperatursensoren detektiert wird, die an zwei unterschiedlichen Positionen entlang der Zirkulationsanordnung (16, 20) der Trocknungsluft angeordnet sind, auf einem zweiten Trocknungsluftschwellenwert oder unterhalb von diesem ist, und
- eine Temperaturdifferenz zwischen einer Trocknungslufttemperatur (Ti, To) zum Zeitpunkt des Deaktivierens des Kompressors (36) und der aktuellen Trocknungslufttemperatur auf einem dritten Trocknungsluftschwellenwert oder oberhalb von diesem ist.

6. Verfahren nach Anspruch 5, wobei, wenn das Ende (12) des Zeitraums (11-12) ermittelt wurde oder wenn der Zeitraum verstrichen ist, einer oder mehrere der folgenden Schritte implementiert wird bzw. werden:
- der Kompressor (36) wird wieder aktiviert,
- die Rotationsgeschwindigkeit (F) von einem oder dem Kühlventilator (42) des Kompressors wird reduziert, oder der Kühlventilator des Kompressors wird deaktiviert, oder die relative Einschaltdauer der Aktivierung des Kühlventilators des Kompressors wird reduziert,
- eine oder mehrere der folgenden werden erhöht:
die Rotationsgeschwindigkeit (G) des Trocknungsluftventilators, die Rotationsgeschwindigkeit (D) der Trommel und die Förderrate des Trocknungsluftventilators (28), und
- eine oder mehrere werden auf die Betriebswerte zum Zeitpunkt unmittelbar vor Starten des Zeitraums (11-12) zurückgesetzt: die Rotationsgeschwindigkeit (F) des Kühlventilators (42) des Kompressors, die Rotationsgeschwindigkeit (D) der Trommel (16) und die Förderrate des Trocknungsluftventilators (28).

7. Verfahren nach einem der vorhergehenden Ansprüche, wobei ein oder der Kühlventilator (42) des Kompressors einen Ventilatormotor mit variabler Drehzahl hat, der mit mindestens zwei verschiedenen Rotationsgeschwindigkeiten (F) rotiert werden kann, die ungleich null sind.

8. Verfahren nach einem der vorhergehenden Ansprüche, wobei der Temperatursensor, der eingerichtet ist, um die Temperatur (Tr) des Wärmepumpensystems (44) zu detektieren, an einer der folgenden Positionen des Wärmepumpensystems angeordnet ist:
- an einem Auslass des ersten Wärmetauschers (32) zum Detektieren der Kühlmitteltemperatur (Tr),
- an einem Auslass des Kompressors (36) zum Detektieren der Kühlmitteltemperatur,
- an dem Kompressor (36) zum Detektieren der Kompressortemperatur,
- an dem zweiten Wärmetauscher (34) zum Detektieren der Kühlmitteltemperatur,
- an einer Expansionsvorrichtung (38), die zwischen dem zweiten und dem ersten Wärmetauscher (32, 34) angeordnet ist, zum Detektieren der Kühlmitteltemperatur,
- in dem Luftkanal (20) zwischen dem ersten Wärmetauscher (32) und dem mindestens einen Lufteinlass (22) an der Trommel (16) zum Detektieren der Trocknungslufttemperatur (Ti),
- in dem Luftkanal (20) zwischen dem mindestens einen Auslass (24) an der Trommel und dem zweiten Wärmetauscher zum Detektieren der Trocknungslufttemperatur (To), oder
- wobei ein erster Temperatursensor in dem Luftkanal (20) zwischen dem ersten Wärmetauscher und dem mindestens einen Lufteinlass an der Trommel angeordnet ist, um eine erste Trocknungslufttemperatur (Ti) zu detektieren, und ein zweiter Temperatursensor in dem Luftkanal zwischen dem mindestens einen Luftauslass an der Trommel und dem zweiten Wärmetauscher angeordnet ist, um eine zweite Trocknungslufttemperatur (To) zu detektieren, wobei die überwachte Temperatur die Temperaturdifferenz (Ti-To) zwischen der ersten und der zweiten Trocknungslufttemperatur ist.

9. Verfahren nach einem der vorhergehenden Ansprüche, wobei während der Zeit, bevor die Temperatur (Tr) auf dem ersten Schwellenwert (Tr1) oder oberhalb von diesem ist, das Trocknungsprogramm wie folgt durchgeführt wird:
- der Kompressor (36) wird aktiviert,
- der Trocknungsluftventilator (28) ist aktiviert,
- die Trommel (16) rotiert und
- ein oder der Kühlluftventilator (42) wird deaktiviert.

10. Verfahren nach einem der vorhergehenden Ansprüche, wobei der Trocknungsluftventilator (28) durch einen oder den Motor (70) angetrieben wird, der unabhängig von einem oder dem Motor (30) ist, der die Trommel (16) antreibt, und wenn die Temperatur (Tr) des Wärmepumpensystems (44) auf dem ersten Schwellenwert (Tr1) oder oberhalb von diesem ist, dann:
- wird der Kompressor (36) deaktiviert,
- wird der Kühlventilator (42) des Kompressors aktiviert,
- wird der Trocknungsluftventilator (28) deaktiviert, und
- rotiert die Trommel (16) oder ist gestoppt.

11. Verfahren nach Anspruch 10, wobei die Trommel (16) mit einem oder mehreren der Folgenden rotiert:
- mit dem gleichen Absolutwert der Rotationsgeschwindigkeit (D1, -D1) wie vor dem Detektieren, dass die Temperatur auf dem ersten Schwellenwert (Tr1) oder oberhalb von diesem ist,
- mit einem reduzierten Absolutwert der Rotationsgeschwindigkeit (D2, -D2) verglichen mit dem Absolutwert der Rotationsgeschwindigkeit (D1, -D1) vor dem Detektieren, dass die Temperatur auf dem ersten Schwellenwert (Tr1) oder oberhalb von diesem ist, und
- mit einer reduzierten relativen Einschaltdauer, verglichen mit der relativen Einschaltdauer vor dem Detektieren, dass die Temperatur auf dem ersten Schwellenwert (Tr1) oder oberhalb von diesem ist.

12. Verfahren nach einem der vorhergehenden Ansprüche, wobei der Trocknungsluftventilator (28) von einem oder dem Motor (70) angetrieben wird, der unabhängig von einem oder dem Motor (30) ist, der die Trommel (16) antreibt, und
- wenn die Temperatur des Wärmepumpensystems (44) auf dem ersten Schwellenwert (Tr1) oder oberhalb von diesem ist, dann
- wird der Kompressor (36) deaktiviert,
- wird der Kühlventilator (42) des Kompressors aktiviert,
- wird die Trommelrotation deaktiviert oder wird die Trommel gestoppt, und
- wird der Trocknungsluftventilator (42) betrieben.

13. Verfahren nach Anspruch 12, wobei der Trocknungsluftventilator (28) mit einer oder mehreren der Folgenden rotiert:
- mit einer reduzierten maximalen Rotationsgeschwindigkeit (G2, G3), verglichen mit der Rotationsgeschwindigkeit (G1) vor dem Detektieren, dass die Temperatur auf dem ersten Schwellenwert (Tr1) oder oberhalb von diesem ist, und
- mit einer reduzierten relativen Einschaltdauer, verglichen mit der relativen Einschaltdauer vor dem Detektieren, dass die Temperatur auf dem ersten Schwellenwert (Tr1) oder oberhalb von diesem ist, oder die Trommelrotation wird gestoppt.

14. Verfahren nach einem der vorhergehenden Ansprüche, wobei der Motor (68) zum Antreiben des Kühlventilators (42) des Kompressors ein Motor mit variabler Drehzahl ist und das Verfahren ferner umfasst:
Empfangen einer Benutzereingabe, welche die Option Leiser Modus oder Nachtmodus für den Betrieb des Trockners angibt, und
wenn die Benutzereingabe eine solche Modusauswahl durch den Benutzer angibt, Betreiben des Kühlventilators (42) des Kompressors mindestens für vorbestimmte Zeiträume des Trocknungsprogramms mit einer zweiten Drehzahl (F2) für den Fall, dass der Kühlventilator des Kompressors aktiviert ist, und
wenn die Benutzereingabe angibt, dass kein derartiger Modus durch den Benutzer ausgewählt wurde, Betreiben des Kühlventilators des Kompressors mit einer ersten Drehzahl (F1) für den Fall, dass der Kühlventilator des Kompressors aktiviert ist,
wobei die erste Drehzahl (F1) höher als die zweite Drehzahl (F2) ist.

15. Verfahren nach einem der vorhergehenden Ansprüche, wobei der Trockner (2) durch einen Waschtrockner implementiert wird, der mindestens ein Waschprogramm bereitstellt,
wobei ein Bottich in dem Gehäuse (4) angeordnet ist und die Trommel (16) in dem Bottich angeordnet ist,
wobei der mindestens eine Auslass (24) der Trommel mindestens ein Auslass des Bottichs ist, oder der mindestens eine Einlass (22) der Trommel mindestens ein Einlass des Bottichs ist, oder der mindestens eine Auslass (24) der Trommel mindestens ein Auslass des Bottichs ist, und der mindestens eine Einlass (22) der Trommel mindestens ein Einlass des Bottichs ist, und
wobei der Trocknungsluftventilator (28) von einem oder dem Motor (70) angetrieben wird, der unabhängig von einem oder dem Motor (30) ist, der die Trommel (16) antreibt.

16. Verfahren nach einem der vorhergehenden Ansprüche, wobei mindestens einer der folgenden Parameter zum Steuern des Trocknungsprogramms:
- der Temperaturwert des ersten Schwellenwerts (Tr1) ,
- der Wert der reduzierten Rotationsgeschwindigkeit des Trocknungsluftventilators (G2, G3),
- der Wert der reduzierten Förderrate des Trocknungsluftventilators,
- der Absolutwert der reduzierten Rotationsgeschwindigkeit der Trommel (D2, -D2),
- der Wert der reduzierten Drehzahl des Kühlventilators des Kompressors (F2),
- die Verzögerungszeit, wenn die Deaktivierung des Kompressors (36) nach der Detektierung, dass die Temperatur des Wärmepumpensystems (44) auf dem ersten Schwellenwert (Tr1) oder oberhalb von diesem ist, verzögert wird,
- der Temperaturwert des zweiten Schwellenwerts (Tr2), und
- ein oder mehrere Parameter zum Betreiben des Trockners, nachdem der Temperaturwert auf dem zweiten Schwellenwert (Tr2) oder unterhalb von diesem ist; abhängig ist von einem oder mehreren der Folgenden:
- einem Wäschebehandlungsprogramm oder Wäschebehandlungsoptionen, die von einem Benutzer über eine Eingabevorrichtung (12) des Trockners festgelegt wurden,
- einem Wäschetyp, wie er durch einen Benutzer festgelegt oder von dem Trockner abgeschätzt wird,
- der Dauer des Wäschebehandlungsprogramms, die von einem Benutzer festgelegt oder von dem Trockner abgeschätzt wurde,
- falls das Trocknungsprogramm Teil eines Wasch- und -Trocknungsprogramms ist, einer Abschätzung des Wassergehalts in der Wäsche am Anfang eines Trocknungsprogramms basierend auf der Gewichtsdifferenz der Wäsche zwischen dem trockenen Wäschegewicht und dem nassen Wäschegewicht am Ende des Waschprogramms,
- der Menge oder dem Gewicht der zu trocknenden Wäsche (18),
- dem aktuellen Feuchtigkeitsgrad der Wäsche,
- der Temperatur (Ti, To) der Trocknungsluft, und
- der Dauer seit Beginn der Trocknung.

## Revendications

1. Procédé de fonctionnement d'une sécheuse à pompe à chaleur (2) pendant un programme de séchage, la sécheuse comprenant :
une caisse (4),
un tambour (16) agencé au sein de la caisse (4) et adapté pour recevoir du linge (18) pour sécher le linge au sein du tambour à l'aide d'air de séchage,
un canal d'air (20) adapté pour guider l'air de séchage depuis au moins un refoulement d'air (24) au niveau du tambour (16) jusqu'à au moins une entrée d'air (22) au niveau du tambour pour fournir un agencement de circulation d'air,
un ventilateur d'air de séchage (28) adapté pour acheminer l'air de séchage à travers l'agencement de circulation d'air,
un système de pompe à chaleur (44) comprenant un premier échangeur de chaleur (32) adapté pour chauffer l'air de séchage, un second échangeur de chaleur (34) adapté pour refroidir l'air de séchage pour la condensation d'humidité, et un compresseur (36) adapté pour faire circuler un fluide frigorigène à travers les premier et
second échangeurs de chaleur, et
un capteur de température adapté pour détecter une température (Tr) du système de pompe à chaleur (44),
dans lequel le procédé comprend :
le démarrage d'un programme de séchage, et
la surveillance de la température (Tr) du système de pompe à chaleur (44),
dans lequel le programme de séchage a une première phase de séchage (P1) qui est avant que la température (Tr) du système de pompe à chaleur atteigne ou dépasse une première valeur seuil, et une seconde phase de séchage (P2) après la première phase de séchage,
dans lequel le procédé comprend en outre le fonctionnement du ventilateur d'air de séchage/tambour à une première vitesse pendant la première phase de séchage, et
si la température (Tr) du système de pompe à chaleur est à ou au-dessus d'une première valeur seuil (Tr1), la désactivation du compresseur (36),
**caractérisé en ce que**
le moteur (30, 70) pour entraîner le ventilateur d'air de séchage (28)/tambour (16) est un moteur à vitesse variable et le procédé comprend en outre :
la réception d'une saisie utilisateur indiquant l'option mode silencieux ou mode nuit pour faire fonctionner la sécheuse, et
si la saisie utilisateur indique cette sélection de mode par l'utilisateur et dans la seconde phase de séchage (P2), le fonctionnement, au moins pendant des périodes prédéterminées du programme de séchage, du ventilateur d'air de séchage/tambour à une seconde vitesse (G2, G3 ; D2, -D2) dans le cas où le ventilateur d'air de séchage/tambour est activé, et
si la saisie utilisateur indique que ce mode n'a pas été sélectionné par l'utilisateur et dans la seconde phase de séchage (P2), le fonctionnement du ventilateur d'air de séchage/tambour à une première vitesse (G1 ; D1, -D1) dans le cas où le ventilateur d'air de séchage/tambour est activé,
dans lequel la valeur absolue de la première vitesse (G1 ; D1, -D1) est plus élevée que la valeur absolue de la seconde vitesse (G2 ; D2, -D2).

2. Procédé selon la revendication 1, dans lequel le ventilateur d'air de séchage (28) est entraîné par un moteur (70) indépendant d'un moteur (30) entraînant le tambour (16), et dans lequel le procédé comprend :
le réglage, au moins pendant une ou plusieurs périodes prédéterminées (P2) du programme de séchage, de la vitesse de rotation (D) ou de la vitesse de rotation maximale du tambour selon la température (Tr) du système de pompe à chaleur (44).

3. Procédé selon la revendication 1 ou 2, dans lequel, si on détecte que la température (Tr) du système de pompe à chaleur (44) est à ou au-dessus de la première valeur seuil (Tr1), le compresseur (36) est désactivé après un temps de retard prédéterminé.

4. Procédé selon la revendication 1, 2 ou 3, dans lequel, en plus de désactiver le compresseur (36) et de réduire au moins l'un de la vitesse de rotation du tambour (D), de la vitesse de rotation du ventilateur d'air de séchage (G2, G3) et du débit d'air de séchage, un ventilateur (42) pour refroidir le compresseur (36) est activé.

5. Procédé selon l'une quelconque des revendications précédentes, dans lequel la fin (12) d'une période (11-12), pendant laquelle le compresseur (36) est arrêté et pendant laquelle au moins l'un de la vitesse de rotation du tambour (D), de la vitesse de rotation du ventilateur (G2, G3) et du débit est réduit, est déterminée en utilisant une ou plusieurs des conditions suivantes :
- lorsqu'une période de temps prédéterminée s'est écoulée,
- la température (Tr) du système de pompe à chaleur (44) est à ou en dessous d'une deuxième valeur seuil (Tr3),
- la température (Ti, To) de l'air de séchage est à ou en dessous d'une première valeur seuil d'air de séchage,
- une différence de température (Ti-To) telle que détectée par deux capteurs de température agencés à deux positions différentes le long de l'agencement de circulation d'air de séchage (16, 20) est à ou en dessous d'une deuxième valeur seuil d'air de séchage, et
- une différence de température entre une température d'air de séchage (Ti, To) au moment de la désactivation du compresseur (36) et la température d'air de séchage actuelle est à ou est au-dessus d'une troisième valeur seuil d'air de séchage.

6. Procédé selon la revendication 5, dans lequel, lorsque la fin (12) de la période (11-12) a été déterminée ou lorsque la période s'est écoulée, une ou plusieurs des étapes suivantes sont mises en oeuvre :
- le compresseur (36) est activé à nouveau,
- la vitesse de rotation (F) d'un ou du ventilateur de refroidissement de compresseur (42) est réduite ou le ventilateur de refroidissement de compresseur est désactivé ou le facteur de marche d'activation du ventilateur de refroidissement de compresseur est réduit,
- un ou plusieurs des éléments suivants sont augmentés :
la vitesse de rotation du ventilateur d'air de séchage (G), la vitesse de rotation du tambour (D), et le taux d'acheminement du ventilateur d'air de séchage (28), et
- un ou plusieurs éléments sont restaurés aux valeurs de fonctionnement au moment immédiatement avant de démarrer la période (11-12) : la vitesse de rotation (F) du ventilateur de refroidissement de compresseur (42), la vitesse de rotation (D) du tambour (16), et le taux d'acheminement du ventilateur d'air de séchage (28).

7. Procédé selon l'une quelconque des revendications précédentes, dans lequel un ou le ventilateur de refroidissement de compresseur (42) comporte un moteur de ventilateur à vitesse variable qui peut être mis en rotation à au moins deux vitesses de rotation (F) différentes qui ne sont pas nulles.

8. Procédé selon l'une quelconque des revendications précédentes, dans lequel le capteur de température adapté pour détecter la température (Tr) du système de pompe à chaleur (44) est agencé à l'une des positions suivantes du système de pompe à chaleur :
- un refoulement du premier échangeur de chaleur (32) pour détecter la température (Tr) du fluide frigorigène,
- un refoulement du compresseur (36) pour détecter la température du fluide frigorigène,
- le compresseur (36) pour détecter la température du compresseur,
- le second échangeur de chaleur (34) pour détecter la température du fluide frigorigène,
- un dispositif de détente (38) agencé entre le second et le premier échangeur de chaleur (32, 34) pour détecter la température du fluide frigorigène,
- dans le canal d'air (20) entre le premier échangeur de chaleur (32) et l'au moins une entrée d'air (22) au niveau du tambour (16) pour détecter la température d'air de séchage (Ti),
- dans le canal d'air (20) entre l'au moins un refoulement (24) au niveau du tambour et le second échangeur de chaleur pour détecter la température d'air de séchage (To), ou
- un premier capteur de température est agencé dans le canal d'air (20) entre le premier échangeur de chaleur et l'au moins une entrée d'air au niveau du tambour pour détecter une première température d'air de séchage (Ti) et un second capteur de température est agencé dans le canal d'air entre l'au moins un refoulement d'air au niveau du tambour et le second échangeur de chaleur pour détecter une seconde température d'air de séchage (To), dans lequel la température surveillée est la différence de température (Ti-To) entre la première et la seconde température d'air de séchage.

9. Procédé selon l'une quelconque des revendications précédentes, dans lequel, pendant le moment avant que la température (Tr) soit à ou au-dessus de la première valeur seuil (Tr1), le programme de séchage est réalisé par :
- le compresseur (36) étant activé,
- le ventilateur d'air de séchage (28) est activé,
- le tambour (16) est mis en rotation, et
- un ou le ventilateur d'air de refroidissement (42) étant désactivé.

10. Procédé selon l'une quelconque des revendications précédentes, dans lequel le ventilateur d'air de séchage (28) est entraîné par un ou le moteur (70) indépendant d'un ou du moteur (30) entraînant le tambour (16) et, lorsque la température (Tr) du système de pompe à chaleur (44) est à ou au-dessus de la première valeur seuil (Tr1), alors :
- le compresseur (36) est désactivé,
- le ventilateur de refroidissement de compresseur (42) est activé,
- le ventilateur d'air de séchage (28) est désactivé, et
- le tambour (16) est mis en rotation ou est arrêté.

11. Procédé selon la revendication 10, dans lequel le tambour (16) est mis en rotation par un ou plusieurs parmi :
- à la même valeur absolue de vitesse de rotation (D1, - D1) qu'avant de détecter que la température est à ou au-dessus de la première valeur seuil (Tr1),
- à une valeur absolue réduite de vitesse de rotation (D2, -D2) comparée à la valeur absolue de vitesse de rotation (D1, -D1) avant de détecter que la température est à ou au-dessus de la première valeur seuil (Tr1), et
- à un facteur de marche réduit comparé au facteur de marche avant de détecter que la température est à ou au-dessus de la première valeur seuil (Tr1).

12. Procédé selon l'une quelconque des revendications précédentes, dans lequel le ventilateur d'air de séchage (28) est entraîné par un ou le moteur (70) indépendant d'un ou du moteur (30) entraînant le tambour (16) et lorsque la température du système de pompe à chaleur (44) est à ou au-dessus de la première valeur seuil (Tr1), alors :
- le compresseur (36) est désactivé,
- le ventilateur de refroidissement de compresseur (42) est activé,
- la rotation de tambour est désactivée ou le tambour est arrêté, et
- le ventilateur d'air de séchage (42) est mis en fonctionnement.

13. Procédé selon la revendication 12, dans lequel le ventilateur d'air de séchage (28) est mis en rotation par un ou plusieurs parmi :
- à une vitesse de rotation maximale réduite (G2, G3) comparée à la vitesse de rotation (G1) avant de détecter que la température est à ou au-dessus de la première valeur seuil (Tr1), et
- à un facteur de marche réduit comparé au facteur de marche avant de détecter que la température est à ou au-dessus de la première valeur seuil (Tr1), ou la rotation de tambour est arrêtée.

14. Procédé selon l'une quelconque des revendications précédentes, dans lequel le moteur (68) pour entraîner le ventilateur de refroidissement de compresseur (42) est un moteur à vitesse variable et le procédé comprend en outre :
la réception d'une saisie utilisateur indiquant l'option mode silencieux ou mode nuit pour faire fonctionner la sécheuse, et
si la saisie utilisateur indique cette sélection de mode par l'utilisateur, le fonctionnement, au moins pendant des périodes prédéterminées du programme de séchage, du ventilateur de refroidissement de compresseur (42) à une seconde vitesse (F2) dans le cas où le ventilateur de refroidissement de compresseur est activé, et
si la saisie utilisateur indique que ce mode n'a pas été sélectionné par l'utilisateur, le fonctionnement du ventilateur de refroidissement de compresseur à une première vitesse (F1) dans le cas où le ventilateur de refroidissement de compresseur est activé,
dans lequel la première vitesse (F1) est plus élevée que la seconde vitesse (F2).

15. Procédé selon l'une quelconque des revendications précédentes, dans lequel la sécheuse (2) est mise en oeuvre par une laveuse-sécheuse fournissant au moins un programme de lavage,
dans lequel une cuve est agencée dans la caisse (4) et le tambour (16) est agencé dans la cuve,
dans lequel l'au moins un refoulement (24) du tambour est au moins un refoulement de la cuve, ou l'au moins une entrée (22) du tambour est au moins une entrée de la cuve, ou l'au moins un refoulement (24) du tambour est au moins un refoulement de la cuve et l'au moins une entrée (22) du tambour est au moins une entrée de la cuve, et
dans lequel le ventilateur d'air de séchage (28) est entraîné par un ou le moteur (70) indépendant d'un ou du moteur (30) entraînant le tambour (16).

16. Procédé selon l'une quelconque des revendications précédentes, dans lequel au moins l'un des paramètres suivants pour commander le programme de séchage :
- la valeur de température de la première valeur seuil (Tr1),
- la valeur de la vitesse de rotation de tambour d'air de séchage réduite (G2, G3),
- la valeur du taux d'acheminement de ventilateur d'air de séchage réduit,
- la valeur absolue de la vitesse de rotation de tambour réduite (D2, -D2),
- la valeur de la vitesse de ventilateur de refroidissement de compresseur réduite (F2),
- le temps de retard, si la désactivation du compresseur (36) est retardée après détection que la température du système de pompe à chaleur (44) est à ou au-dessus de la première valeur seuil (Tr1),
- la valeur de la température de la deuxième valeur seuil (Tr2), et
- un ou plusieurs paramètres de fonctionnement de la sécheuse après que la valeur de température est à ou en dessous de la deuxième valeur seuil (Tr2) ;
dépend d'un ou de plusieurs des éléments suivants :
- un programme de traitement du linge ou des options de traitement du linge réglés par un utilisateur via un dispositif de saisie (12) de la sécheuse,
- un type de linge réglé par un utilisateur ou estimé par la sécheuse,
- la durée du programme de traitement du linge réglée par un utilisateur ou estimée par la sécheuse,
- dans le cas où le programme de séchage fait partie d'un programme de lavage et de séchage, une estimation de la teneur en eau du linge au début d'un programme de séchage d'après la différence de poids du linge entre le poids du linge sec et le poids du linge humide à la fin du programme de lavage,
- la quantité ou le poids du linge (18) à sécher,
- le degré d'humidité actuel du linge,
- la température (Ti, To) de l'air de séchage, et
- la durée depuis le démarrage du séchage.
